**Europäisches Patentamt**

(19) **European Patent Office**

**Office européen des brevets**

(11) Numéro de publication: **0 015 244**
**B1**

(12) # FASCICULE DE BREVET EUROPEEN

(45) Date de publication du fascicule du brevet:
**25.05.83**

(51) Int. Cl.³: **H 02 K 15/02,** H 02 K 3/34,
H 02 K 1/14, C 25 D 13/12

(21) Numéro de dépôt: **80810070.5**

(22) Date de dépôt: **26.02.80**

(54) **Procédé de fabrication de stators pour moteurs pas à pas de montres électroniques, et moteur réalisé selon le procédé.**

(30) Priorité: **27.02.79 CH 1931/79**

(43) Date de publication de la demande:
**03.09.80 Bulletin 80/18**

(45) Mention de la délivrance du brevet:
**25.05.83 Bulletin 83/21**

(84) Etats contractants désignés:
**DE FR GB**

(56) Documents cités:
**DE-A-2 559 635**
**DE-A-2 853 396**
**FR-A-2 084 521**
**FR-A-2 412 103**
**GB-A-1 457 676**
**GB-A-2 010 593**
**US-A-3 813 327**

(73) Titulaire: **Eta A.G. Ebauches-Fabrik,
Schildruststrasse 17, CH-2540 Grenchen (Canton de
Soleure) (CH)**

(72) Inventeur: **Perucchi, Norberto, Chair d'Ane 24,
CH-2072 St.Blaise (CH)**
Inventeur: **Mock, Elmar, Crêt des Fleurs 4a,
CH-2503 Bienne (CH)**

(74) Mandataire: **Bovard, Fritz Albert et al, Bovard & Cie
Ingénieurs- Conseils ACP et Avocats
Optingenstrasse 16, CH-3000 Berne 25 (CH)**

## Procédé de fabrication de stators pour monteurs pas à pas de montres électroniques, et moteur réalisé selon le procédé

On connaît déjà (DE-AS 2 559 635) un moteur pas à pas susceptible d'être incorporé à une montre et dont le stator comporte une bobine montée sur un noyau allongé, dont les deux extrémités sont reliées à des pièces polaires. Celles-ci entourent le rotor et sont conformées de façon à conduire et diriger le flux magnétique résultant des impulsions de courant afin que l'action du flux du stator sur celui du rotor provoque la rotation de ce dernier. En outre, les pièces polaires ont pour fonction de bloquer le rotor dans une orientation stable entre les impulsions.

Les moteurs pas à pas destinés aux électroniques et spécialement aux montres-bracelet, sont l'objet de perfectionnements constants destinés à améliorer leur fiabilité, à diminuer leur encombrement ou leur prix de revient, ou à améliorer leur rendement. La puissance que le moteur doit fournir sur le pignon de son rotor est imposée par la disposition du rouage et des éléments d'affichage.

Le rendement dépend de la construction du moteur et des matériaux employés. Les dimensions de la bobine statorique, qui forme l'élément le plus volumineux de ce type de moteurs dépendent de la puissance, du rendement et de l'agencement de l'enroulement. Entre la surface du noyau et les premières spires de l'enroulement, il est nécessaire de prévoir une couche intermédiaire de matière isolante qui protège l'isolation des premières spires. Or, si la section du noyau est de l'ordre de 0,6 × 0,6 mm par exemple, la présence d'une couche intermédiaire de 0,1 mm d'épaisseur augmente la longueur de la première couche de spires de 25%.

Pour des raisons de fabrication, les noyaux sont de préférence constitués par des éléments découpés dans une bande de métal et il est avantageux, au point de vue de la rentabilité des opérations, de conduire le découpage de façon qu'il soit réalisé en une seule étape, sans reprise. On sait toutefois qu'une telle opération a tendance à laisser des angles vifs précisément dans les zones qui supportent le bobinage, et cette circonstance compliquait jusqu'à maintenant la mise au point d'une méthode de fabrication assurant sumultanément une fiabilité optimale, une simplification telle que la production en grande série soit garantie, et un encombrement minimum.

Ainsi, dans la construction rappelée plus haut, la couche intermédiaire qui supporte le bobinage forme un corps de bobine qui est mis en place par projection de particules sur le noyau.

La présente invention se propose de diminuer l'encombrement des bobines des moteurs pas à pas pour montres tout en assurant la fiabilité du moteur et sans augmenter les coûts de fabrication.

Dans le domaine de la fabrication des moteurs industriels comportant des noyaux magnétiques formés d'empilages de tôles, découpées avec des encoches ou des pôles saillants, il était connu (FR 2 084 521) de revêtir les faces internes des encoches ou les faces externes des pôles saillants d'une couche de matière plastique formée par dépôt électrostatique puis chauffage. Il se forme alors sur les arêtes vives des tôles découpées un revêtement lisse et épais qui protège l'isolation des conducteurs. Les zones qui ne doivent pas être protégées sont masquées pendant la phase de dépôt électrostatique.

La formation de revêtements minces de produits colorants sur des bandes métalliques par électrophorèse était également connue (US 3 813 327) et on savait que des revêtements d'une épaisseur de l'ordre de 10 μ pouvaient être formés sur des bandes continues par ce moyen. Toutefois il n'était pas évident que ce procédé permettrait d'apporter l'amélioration désirée dans la fabrication des moteurs pas à pas destinés aux montres et en particulier aux montres-bracelet.

Selon l'invention le but indiqué plus haut est atteint par un procédé de fabrication de stators pour moteurs pas à pas de montres électroniques, caractérisé par la suite d'opérations suivante:

- découpage partiel de noyaux formés d'une partie centrale allongée et de parties extrêmes élargies, dans une bande de métal ferromagnétique,
- dépôt d'un masque sur les zones marginales d'une face de ladite bande de manière à recouvrir les dites parties élargies des noyaux,
- formation d'un film de résine adhérant et mince sur les parties non masquées de ladite bande, par électrophorese,
- élimination du masque, puis terminaison du découpage,
- formation de bobines par enroulement d'un fil isolé sur les dits films isolants le long des parties centrales des noyaux.

Selon un autre aspect de l'invention, un moteur pas à pas pour montre électronique dont le stator comporte une bobine allongée, un noyau en métal ferromagnétique venu d'une pièce avec des parties extrêmes élargies et avec une partie centrale de section rectangulaire qui traverse ladite bobine axialement, et deuc pièces polaires reliées magnétiquement aux dites parties élargies par recouvrement et contact superficiel, est caractérisée en ce que ladite partie centrale du noyau et une face des dites parties élargies sont revêtues d'un film de résine d'une épaisseur de l'ordre de 10 microns et en ce que les spires de la bobine reposent directement sur ce film.

On va décrire ci-après, à titre d'exemple, une forme d'exécution du moteur selon l'invention et le procédé de fabrication appliqué, en se référant au dessin annexé dont:

la fig. 1 est une vue en plan de dessus de ce moteur,

la fig. 2 une vue en coupe selon la ligne II-II de la fig. 1,

la fig. 3 une vue en coupe à plus grande échelle selon la ligne III-III de la fig. 2, et

la fig. 4 une vue schématique en perspective illustrant une étape du procédé de fabrication du moteur.

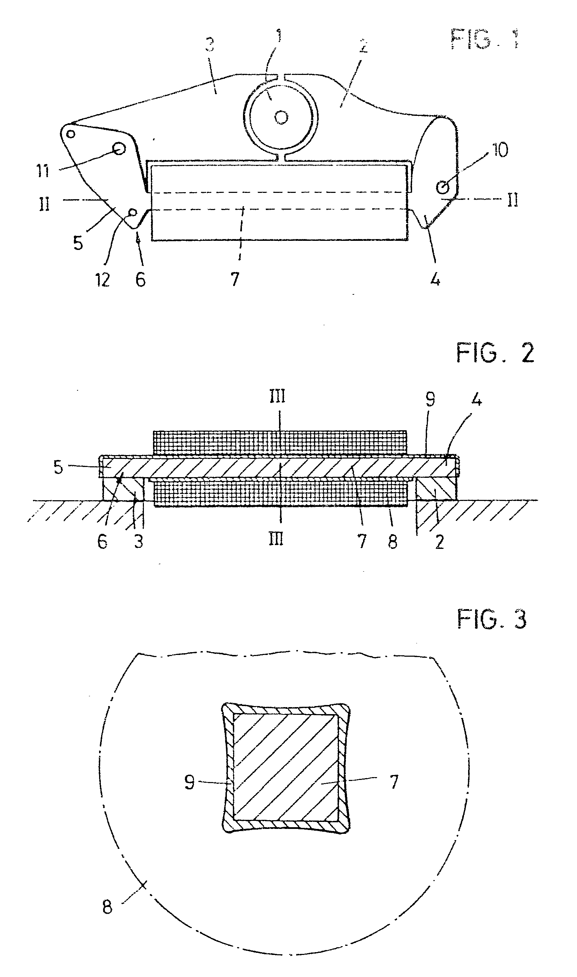

Le moteur visible aux fig. 1 et 2 est d'un type usuel dans les montres-bracelet à quartz à moteur pas à pas. Le rotor 1 qui est constitué d'un aimant cylindrique aimanté diamétralement et d'un arbre qui traverse l'aimant de part en part, est supporté par deux paliers solidaires du bâti du mouvement et tourne entre les faces concaves opposées de deux pièces polaires 2 et 3 découpées dans des plaques en matière ferromagnétique de dimensions convenables. A une extrémité, l'arbre porte un pignon qui entraîne un rouage démultiplicateur de vitesse, actionnant les aiguilles. Les pièces polaires 2 et 3 sont connectées magnétiquement par leurs extrémités aux oreilles 4 et 5 qui constituent les extrémités d'un noyau 6 dont la partie centrale 7 a la forme d'une barre rectiligne de profil rectangulaire. Cette partie centrale est engagée dans la bobine 8 formée d'une multitude de spires d'un fil de cuivre isolé très fin. La bobine est parcourue par des impulsions de courant et à chaque impulsion, elle fournit au circuit magnétique l'énergie de rotation du moteur. On sait que les impulsions de courant de durée très brève qui parcourent la bobine 8 et qui impriment au rotor 1 une rotation d'un angle prédéterminé peuvent atteindre une intensité voisine de un milliampère. Ces impulsions de courant créent dans le circuit magnétique 7, 4, 2, 3, 5 des flux magnétiques momentanés dont l'interaction avex le flux du rotor 1 crée le couple qui entraîne le rouage. Il est donc essentiel que le flux magnétique soit aussi intense que possible, autrement dit que les pertes magnétiques soient aussi réduites que possible.

Comme on le voit à la fig. 3, la partie centrale 7 du noyau 6 est revêtue sur ses quatre faces d'un film 9. Ce film, d'une épaisseur de l'ordre de 10 microns est constitué d'un produit du type des résines qui, une fois déposé, présente les propriétés d'être fortement adhérant au métal du noyau 6, d'être isolant, compact et dur de façon à constituer un bon support les spires de fil de cuivre qui forment la bobine 8.

Le moteur décrit présente la particularité visible à la fig. 2 où l'on voit que le noyau 6 est entièrement revêtu du film 9, sauf sur la face inférieure des oreilles 4 et 5. En effet, ces faces sont nues et sont en contact direct avec le métal des extrémités des pièces polaires 2 et 3. L'une des oreilles est percée d'un trou 10 permettant de fixer la pièce polaire 2 à la fois au support du moteur et à l'oreille 4, tandis que l'oreille 5 présente dans le même but également un trou 11, mais, de plus, deux trous de centrage 12. Les pièces qui forment le stator du moteur peuvent aussi être fixées sur un support rigide faisant partie du mouvement. Le flux magnétique passe par contact métallique direct du noyau 6 par les oreilles 4 et 5 dans les pièces polaires 2 et 3, de sorte que la résistance magnétique du circuit est minimale.

Si le noyau était entièrement revêtu d'un film mince tel que le film 9, ce film constituerait une barrière entre les pièces polaires et les oreilles 4 et 5. Il fallait donc appliquer un procédé permettant de recouvrir par des moyens rationnels susceptibles d'être appliqués en grande série des noyaux tels que le noyau 6 d'un film mince ne dépassant pas 10 microns d'épaisseur, tout en maintenant les faces des oreilles destinées à venir en contact avec les pièces polaires dépourvues de ce film. Or, on s'est aperçu qu'il était possible de former sur les noyaux un film adhérant, dur et isolant de 10 microns d'épaisseur par un traitement d'électrophorèse. Selui-ci présente plusieurs avantages. Il est d'une mise en oeuvre très rationnelle puisqu'on peut s'arranger pour que le dépôt des ions cesse automatiquement quand l'épaisseur atteint les 10 $\mu$ désirés. D'autre part, les angles du profil provoquent au cours du dépôt une augmentation de la concentration des ions déposés, ce qui conduit à une légère surépais-seur, représentée de façon exagérée à la fig. 3. Cet effet est très favorable à la conservation du film isolant déposé directement sur le noyau. Les angles des parties contrales 7 des noyaux obtenus par découpage d'une bande ne risquent pas de blesser le fil de cuivre. Toutefois, le traitement par électrophorèse entraîne le dépôt du film sur toutes les faces des pièces qui sont placées dans le bain. Or, dénuder les faces des oreilles par une opération faite en reprise, serait peu rationnel. L'opération serait longue, fastidieuse et présenterait le risque de détériorer le métal du noyau.

On va expliquer maintenant comment un noyau, tel que le noyau 6, dont le film 9 présente la faible épaisseur des films déposés par électrophorèse peut être obtenu de façon rationnelle sans que les faces des oreilles destinées à venir en contact avec les pièces polaires ne soient revêtues de ce film.

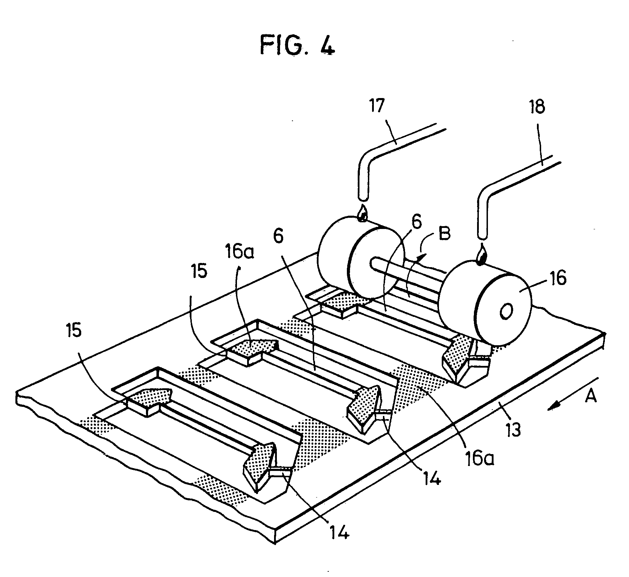

La fig. 4 illustre le procédé. Elle montre une bande de matière 13 dans laquelle des ébauches des noyaux 6 ont été formées par une opération de découpage laissant les ébauches rattachées au reste de la bande par d'étroits pédoncules 14 et 15. La bande 13 est soumise à une opération de calendrage au cours de laquelle un tampon rotatif représenté schématiquement en 16 est mis en contact avec les zones qui forment les oreilles des noyaux 6. La bande étant déplacée dans le sens de la flèche A, le tampon rotatif 16 est mû en rotation dans le sens de la flèche B. Par les conduites 17 et 18 un liquide comprenant une matière plastique dissoute dans un solvant par exemple du Polystyrène dissout dans le perchloréthylène est amené réfulièrement sur les deux extrémités du tampon 16. Une couche 16a de cette solution se dépose donc sur une des faces des oreilles 4 et 5 et sur les zones correspondantes du reste de la bande. Par évaporation du perchloréthylène, la couche de polystyrène ainsi formée se fixe sur le métal des oreilles et y adhère fortement.

Cette opération peut s'effectuer rapidement et d'une façon rationnelle sur des séries d'ébauches de noyaux maintenues assemblées à la bande 13 par des pédoncules 14 et 15.

Puis la bande 13 est soumise à l'opération d'électrophorèse connue en soi. Au cours de cette opération, toutes les surfaces nues des ébauches des noyauc sont revêtues du film 9 qui atteint, comme on l'a dit précédemment, une épaisseur constante de l'ordre de 10 μ, avec toutefois des renforcements aux angles du profil.

La troisième opération à effectuer consiste en l'élimination des masques que forment les couches de polystyrène revêtant une des faces des oreilles. Cette élimination est réalisée facilement au moyen du même solvant que celui qui a été utilisé pour permettre l'opération de calendrage. Les bandes 13 sont donc plongées dans un bain de perchloréthylène de façon à éliminer les masques. Bien entendu, après cette opération, les noyaux 6 sont séparés de la bande 13 par une nouvelle opération de découpage.

Pour obtenir ses propriétés magnétiques définitives, le matériau ferromagnétique dont les noyaux 6 sont constitués doit subir un traitement thermique. Toutefois, ce traitement a pour conséquence de rendre le métal des noyaux très mou.

Selon une particularité avantageuse du procédé décrit, le traitement thermique nécessaire peut avoir lieu entre la troisième opération mentionnée ci-dessus et la séparation des noyaux.

C'est ainsi que l'on obtient des noyaux 6 qui, tout en étant revêtus d'un film mince adhérant et dur Susceptible de supporter le bobinage présentent des oreilles dont une des faces est dénudée et peut par conséquent être en contact métallique avec les pièces polaires.

Cette construction présente un double avantage, d'une part, grâce à la minceur du film 9, l'encombrement de la bobine 8 est occupé dans la plus grande proportion possible par du cuivre, ce qui permet de créer un flux magnétique maximum dans un volume total minimum, et d'autre part, comme il y contact métallique entre les oreilles du noyau et les pièces polaires, le flux magnétique créé dans le noyau au moment des impulsions de courant se transmet aux pièces polaires avec un rendement amélioré. L'impulsion de courant est donc utilisée au maximum pour créer un couple sur le rotor.

Bien entendu, le dépôt des masques formé d'une matière plastique dissoute dans un solvant convenable pourrait également être effectué par d'autres moyens que l'opération de calendrage représenté à la fig. 4. On pourrait, par example, Procéder au dépôt par projection en protégeant la bande 13 par des chablons, ou poser les masques au moyen de brosses ou de pinceaux.

**Revendications**

1. Procédé de fabrication de stators pour moteurs pas à pas de montres électroniques, caractérisé par la suite d'opérations suivante:

- découpage partiel de noyaux (6) formés d'une partie centrale allongée (7) et de parties extrêmes élargies (4, 5) dans une bande (13) de métal ferromagnétique,
- dépôt d'un masque (16a) sur les zones marginales d'une face de ladite bande de manière à recouvrir les dites parties élargies (4, 5) des noyaux (6),
- formation d'un film de résine (9) adhérant et mince sur les parties non masquées de ladite bande, par électrophorèse,
- élimination du masque (16a), puis terminaison du découpage,
- formation de bobines (8) par enroulement d'un fil isolé sur les dits films isolants le long des parties centrales des noyaux (6).

2. Procédé selon la revendication 1, caractérisé en ce que l'opération d'électrophorèse est conduite de façon que le film (9) de résine ait une épaisseur de l'ordre de 10 microns.

3. Procédé selon la revendication 1, caractérisé en ce qu'un traitement thermique est effectué sur la bande (13) après l'élimination du masque (16a) et avant la terminaison du découpage.

4. Procédé selon l'une quelconque des revendications précédentes, caractérisé en ce que chaque noyau (6) pourvu de sa bobine (8) est fixé sur le bâti d'un mouvement de montre et en ce que des pièces polaires (2, 3) sont montées sur ledit bâti de façon que leurs extrémités recouvrent les parties élargies (4, 5) du noyau sur leur face dénudée, le flux magnétique créé par la bobine (8) passant directement du noyau aux dites pièces polaires.

5. Procédé selon la revendication 1, caractérisé en ce que le dépôt des masques est réalisé par application d'une solution de matière isolante et étanche dans un solvant volatil, ladite matière étant insoluble dans un bain d'électrophorèse.

6. Procédé selon la revendication 5, caractérisé en ce que l'application est faite par contact direct ou par projection.

7. Procédé selon la revendication 5, caractérisé en ce que le solvant est du perchlorethylène et le produit destiné à former le masque est du polystyrène.

8. Moteur pas à pas pour montre électronique dont le stator comporte une bobine allongee (8), un noyau en métal ferromagnétique (6) venu d'une pièce avec des parties extrêmes élargies (4, 5) et avec une partie centrale (7) de section rectangulaire qui traverse ladite bobine axialement, et deux pièces polaires (2, 3) reliées magnétiquement aux dites parties élargies par recouvrement et contact superficiel, caractérisé en ce que ladite partie centrale (7) du noyau (6) et une face des dites parties élargies (4, 5) sont revêtues d'un film (9) de résine d'une épaisseur de l'ordre de 10 microns et en ce que les spires de la bobine (8) reposent directement sur ce film.

9. Moteur selon la revendication 3, caractérisé en ce que ledit film de résine présente des zones renforcées sur les arêtes du noyau.

## Patentansprüche

1. Verfahren zur Herstellung von Schrittschaltmotorstatoren für elektronische Uhren, gekennzeichnet durch folgende Reihe von Operationen:

— Teilstanzen von, aus einem länglichen Mittelteil und äußeren verbreiteten Enden bestehenden Spulenkernen in einem ferromagnetischem Metallband,
— Aufbringen einer Maske auf die Randzonen einer Seite des Metallbandes, so daß die verbreiteten Enden der Kerne abgedeckt werden,
— Aufbauen eines haftenden, dünnen Harzfilmes auf die durch die Maske nicht abgedeckten Teile des Bandes durch Elektrophorese,
— Eliminierung der Maske und Fertigstanzen,
— Bildung von Spulen durch Aufwickeln eines isolierten Drahtes auf die isolierenden Filme längs der Mittelteile der Spulenkernen.

2. Verfahren nach Patentanspruch 1, dadurch gekennzeichnet, daß die Elektrophorese so ausgeführt wird, daß der Harzfilm eine Dicke von ca. 10 m aufweist.

3. Verfahren nach Patentanspruch 1, dadurch gekennzeichnet, daß das Metallband nach Eliminierung der Maske und vor dem Fertigstanzen thermisch behandelt wird.

4. Verfahren nach irgendeinem der Ansprüche 1–3, dadurch gekennzeichnet, daß jeder Spulenkern mit seiner Spule auf eine Werkplatte befestigt wird, und daß Polteile so auf die Werkplatte montiert sind, daß ihre Enden über die verbreiteten Enden des Kerns auf ihrer nicht gedeckten Seite liegen, so daß der durch die Spule erzeugte Magnetfluß direkt vom Kern zu den Polteilen übergeht.

5. Verfahren nach Patentanspruch 1, dadurch gekennzeichnet, daß das Aufbringen der Masken durch Anbringen einer Lösung eines isolierenden und wasserfesten in einem Elektrophoresebad nicht auflösbares Materials in einem verdampfbaren Lösungsmittel erfolgt.

6. Verfahren nach Patentanspruch 5, dadurch gekennzeichnet, daß das Aufbringen durch direkten Kontakt oder durch Projektion erfolgt.

7. Verfahren nach Patentanspruch 5, dadurch gekennzeichnet, daß das Lösungsmittel Perchlor-

ethylen ist und daß das Material zur Bildung der Maske Polystyren ist.

8. Schrittschaltmotor für eine elektronische Uhr, dessen Stator eine längliche Spule, einen metallischen ferromagnetischen Kern, der mit verbreiteten Enden und einem, einen quadratischen Querschnitt aufweisenden, Mittelteil, der die Spule axial durchdringt, einstückig ausgebildet ist, und zwei mit den oben genannten verbreiteten Teilen durch Überliegen und oberflächigem Kontakt verbundenen Polarteilen, dadurch gekennzeichnet, daß der Mittelteil des Kernes und eine Seite der verbreiteten Enden mit einem Harzfilm von einer Dicke von ca. 10 μm überzogen sind, und daß die Windungen der Spule direkt auf diesem Film aufliegen.

9. Schrittschaltmotor gemäß Patentanspruch 8, dadurch gekennzeichnet, daß der Harzfilm verstärkte Zonen auf den Kanten des Kernes aufweist.

## Claims

1. A method of manufacturing stators for stepping motors of electronic watches, characterized by the following steps:

— partially blanking from a strip (13) of ferromagnetic metal coil cores (6), each having an elongated center portion (7) and widened end portions (4, 5);
— depositing a mask (16a) on the marginal zones of one face of said stip for covering said widened portions (4, 5) of the coil cores (6);
— forming a thin adherent film (9) of resin on the non-masked portions of said strip, by electrophoresis:
— removing said mask (16a) and completing said blanking;
— forming coils (8) by winding insulated wire over said insulating films along said center portions of the coil cores (6).

2. A method according to claim 1, characterized by the fact that the operation of electrophoresis is carried out in such a way that the thickness of the resin film (9) is on the order of 10 microns.

3. A method according to claim 1, characterized by the fact that a heat treatment is applied to said strip (13) after removal of said mask (16a) and prior to completion of the blanking.

4. A method according to anyone of said preceeding claims characterized by the fact that each coil core (6) provided with it coil (8) is decured to the frame of a watch movement and that pole pieces (2, 3) are mounted on sais frame so that their ends cover the bare face of the widened portions (4, 5) of the coil the magnetic flux created by the coil (8) passing directly from the core coil (6) to said pole pieces (2,3).

5. A method according to claim 1, characterized by the fact that the mask deposition is

performed by applying a solution of an insulating and impervious material in a volatil solvent, said material being insoluble in an electrophoresis bath.

6. A method according to claim 5, characterized by the fact that the application is performed by direct contact or by spraying.

7. A method according to claim 5, characterized by the fact that the solvent is perchloroethylene and the material for forming the mask is polystyrene.

8. A stepping motor for an electronic watch having a stator comprising an elongated coil (8), a one piece core (6) made of a ferromagnetic metal including widened end portions (4, 5) and a center portion (7) of tectangular cross section passing axially through said coil, and two pole pieces (2, 3) magnetically connected to said widened portions by overlapping and surface contact, characterized by the fact that the center portion (7) of the core and one face of said widened portions (4, 5) are covered by a resin film (9) having a thickness on the order of 10 microns and the turns of the coil (8) rest directly on this film.

9. A motor according to claim 8, characterized by the fact that said resin film includes reinforced zones on the edges of the core.

FIG. 1

FIG. 2

FIG. 3

# FIG. 4